# FASCICULE DE BREVET EUROPEEN

(11) **EP 3 795 480 B1**
(45) Date de publication et mention de la délivrance du brevet: **28.02.2024**
(21) Numéro de dépôt: 20196586.0
(22) Date de dépôt: 17.09.2020
(51) Int. Cl.: B64G 1/22, B64G 1/44, F24S 20/50, B65H 75/36, H02S 30/20

(54) **DISPOSITIF DÉPLOYABLE**
AUSKLAPPBARE VORRICHTUNG
DEPLOYABLE DEVICE

(30) Priorité: 19.09.2019 FR 1910313
(43) Date de publication de la demande: 24.03.2021
(73) Titulaire: THALES, 92190 Meudon (FR)
(72) Inventeur: BAUDASSE, Yannick, 06156 CANNES LA BOCCA CEDEX (FR); VEZAIN, Stéphane, 06156 CANNES LA BOCCA CEDEX (FR)
(74) Mandataire: Atout PI Laplace

(56) Documents cités:
- EP-A1- 2 471 714
- EP-A1- 3 012 193
- US-A- 4 636 579
- US-A- 5 605 769
- US-A1- 2017 021 947
- US-B1- 9 156 568

## Description

La présente invention concerne un dispositif déployable pour mètre-rubans. Elle s'applique notamment au domaine des équipements spatiaux pour lesquels des structures doivent être déployées en orbite et plus particulièrement aux équipements spatiaux pour satellites, tels que des générateurs solaires, des écrans thermiques. Toutefois, l'invention s'applique à tout autre domaine nécessitant le déploiement d'une structure.

### ETAT DE LA TECHNIQUE

Dans le domaine spatial, les mètre-rubans sont fréquemment utilisés dans le déploiement. En position stockée (ou enroulée), les mètre-rubans sont enroulés autour d'un mandrin. Le déploiement des mètre-rubans est assuré de manière autonome par leur déroulement spontané lorsque le mandrin est libre en rotation. Les mètre-rubans sont connus dans le domaine spatial comme étant des rubans flexibles ayant une section en arc de cercle dont le rayon de courbure est convexe sur une première face et concave sur une deuxième face, ces rubans étant aptes à passer de l'état enroulé à l'état déployé essentiellement grâce à leur énergie élastique propre. Il existe différents types de ruban ayant des propriétés propres. Les rubans monostables possèdent une position naturelle déployée et nécessitent un maintien en position stockée. Les mètre-rubans monostables ont donc une tendance naturelle à se déployer pour se retrouver dans leur état déroulé. Le déploiement des rubans monostables est souvent anarchique et incontrôlé. Les rubans bistables possèdent deux positions naturelles (position enroulée et position déployée). Leur déploiement est linéaire et contrôlé.

Lorsque l'on souhaite déployer une structure à partir de mètre-rubans, il faut que les mètre-rubans assurent le maintien de l'objet en configuration enroulée et la rigidité de l'ensemble pendant le déploiement. Le mandrin peut être lié à la structure porteuse au niveau de ses extrémités. Cela permet d'optimiser la surface utile, par exemple de la membrane enroulée autour du mandrin sur laquelle sont disposées des cellules solaires. Cela permet aussi de minimiser les interfaces d'accroche sur la structure porteuse. Ce type de configuration répond aux contraintes associées aux dispositifs déployables, liées aux problématiques de compacité et de rigidité en configuration stockée et d'optimisation de masse embarquée.

Dans la configuration connue de l'art antérieur dans laquelle le mandrin est lié à la structure porteuse au niveau de ses extrémités, le mandrin doit reprendre toutes les charges de lancement. Son diamètre étant limité par la contrainte de volume de stockage disponible, les capacités de reprises du mandrin sont également limitées.

Cela devient particulièrement problématique dans le cas de grandes structures déployables qui impliquent de plus grandes charges de lancement.

Pour résoudre ce problème, les solutions existantes sont basées sur l'adjonction de gerbage sur la partie centrale du mandrin. Par exemple, une ceinture de gerbage est reliée au mandrin pour contribuer à la reprise des charges. Selon la taille de la structure déployable, il peut aussi y avoir deux ou trois ceintures de gerbage. Il en résulte une réduction de la surface utile. En outre, l'adjonction de gerbage supplémentaire a un impact sur les performances de la structure en termes de masse embarquée et de fréquence en configuration déployée. Enfin, un gerbage additionnel peut aussi présenter un risque de non-déploiement de la structure. Des dispositifs déployables connus de l'art antérieur sont notamment décrits dans les documents EP 3012193 et US 5605769.

### EXPOSE DE L'INVENTION

L'invention vise à pallier tout ou partie des problèmes cités plus haut en proposant un dispositif déployable pour mètre-rubans robuste, compact et rigide en configuration enroulée, capable de reprendre de grandes charges de lancement, tout en garantissant une surface utile maximale, et permettant le déploiement d'une structure de grande dimension.

A cet effet, l'invention a pour objet un dispositif déployable selon la revendication 1.

Avantageusement, la coque est composée d'une peau en matériaux composites.

Avantageusement, la coque comprend au moins un renfort sensiblement parallèle au premier axe Z.

Avantageusement, la coque comprend au moins un circuit imprimé flexible et/ou des composants électroniques.

L'invention concerne aussi un ensemble déployable comprenant un tel dispositif déployable et deux mètre-rubans positionnés de part et d'autre de la membrane et reliés à la membrane, chacun étant apte à passer d'une configuration enroulée autour du premier axe Z en configuration enroulée du dispositif déployable à une configuration déployée selon le deuxième axe X en configuration déployée du dispositif déployable.

Avantageusement, la membrane s'étend entre les deux mètre-rubans.

Avantageusement, l'ensemble déployable comprend en outre au moins un renfort s'étendant entre les deux mètre-rubans apte à relier la membrane aux mètre-rubans.

Avantageusement, la coque est reliée aux deux mètre-rubans.

Avantageusement, l'ensemble déployable comprend un galet configuré pour être en appui sur la coque en configuration enroulée.

L'invention concerne aussi un satellite comprenant au moins un tel ensemble déployable.

### DESCRIPTION DES FIGURES

L'invention sera mieux comprise et d'autres avantages apparaîtront à la lecture de la description détaillée d'un mode de réalisation donné à titre d'exemple, description illustrée par le dessin joint dans lequel :
[Fig.1] La figure 1 représente schématiquement un dispositif déployable en configuration enroulée selon l'invention ;
[Fig.2] La figure 2 représente schématiquement une vue en coupe d'un dispositif déployable selon l'invention ;
[Fig.3] La figure 3 représente schématiquement une partie d'un ensemble déployable en configuration déployée selon l'invention ;
[Fig.4] La figure 4 représente schématiquement un ensemble déployable en configuration enroulée selon l'invention ;
[Fig.5] La figure 5 représente schématiquement un ensemble déployable en configuration déployée selon l'invention ;
[Fig.6] La figure 6 représente schématiquement un satellite comprenant un ensemble déployable selon l'invention.

### EXPOSÉ DÉTAILLÉ DE L'INVENTION

Par souci de clarté, les mêmes éléments porteront les mêmes repères dans les différentes figures.

L'invention s'applique à des mètre-rubans monostables ou bistables. La mise en oeuvre de mètre-rubans monostables demande un effort de guidage plus important. Les mètre-rubans bistables sont préférés pour l'homogénéité de leur déploiement. De plus, en configuration enroulée, ils restent enroulés et en configuration déployée, ils restent déployés.

En outre, l'invention est décrite dans l'exemple non limitatif d'un déploiement sur satellite, mais elle s'applique à tout autre domaine nécessitant le déploiement d'une structure.

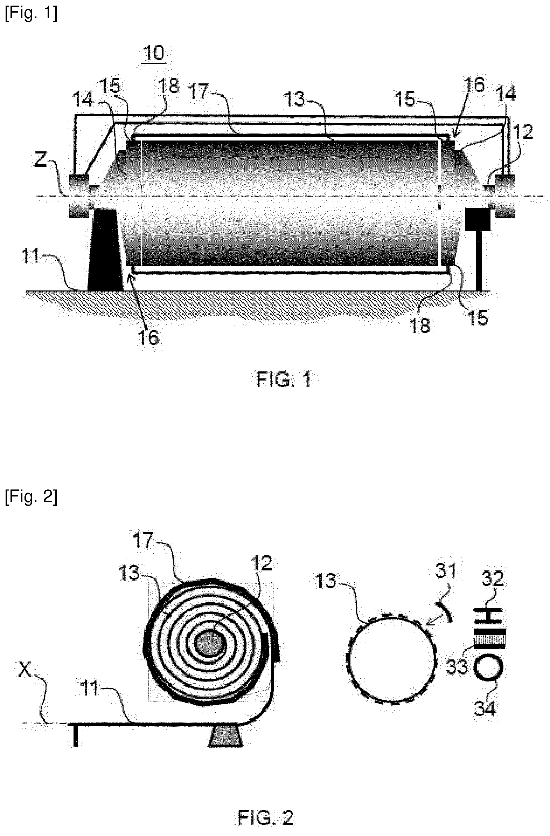

La figure 1 représente schématiquement un dispositif déployable 10 en configuration enroulée selon l'invention. Le dispositif déployable 10 comprend un bâti 11, par exemple la structure porteuse, par exemple la caisse du satellite. Il comprend aussi un mandrin 12 mobile en rotation par rapport au bâti 11 autour d'un premier axe Z. Le mandrin 12 peut être relié au bâti par une structure fixe, ou bien au moyen de deux pieds, par exemple un tripode et une lame, pendant la phase de lancement du satellite et libéré du bâti 11 ensuite.

Le dispositif déployable comprend une membrane 13 apte à passer d'une configuration enroulée autour du mandrin autour du premier axe Z à une configuration déployée selon un deuxième axe X sensiblement perpendiculaire au premier axe Z. Cette membrane 13 peut être équipée de cellules solaires réparties à sa surface.

Selon l'invention, le dispositif déployable 10 comprend deux ferrures 14 solidaires du mandrin 12 sensiblement en leur centre, disposées de part et d'autre de la membrane 13 et comprenant des premiers plots 15 sur leur pourtour 16, et une coque 17 s'étendant entre les deux ferrures 14, la coque 17 comprenant des deuxièmes plots 18 de forme complémentaire à la forme des premiers plots 15, la coque 17 étant apte à passer d'une configuration enroulée enveloppant au moins partiellement la membrane 13 en configuration enroulée à une configuration déployée superposée au moins partiellement à la membrane 13 en configuration déployée. Les deux ferrures 14 sont avantageusement solidaires des pieds de gerbage en configuration de lancement qui constituent des points d'appui du dispositif déployable 10 lorsque celui-ci est replié lors de la phase de lancement. La coque 17 forme pour la membrane 13 un mandrin extérieur avec une très forte inertie, et enveloppant la membrane 13. Ainsi, la coque 17 reprend les charges de lancement. Comme représenté sur les figures, les ferrures 14 sont de forme circulaire. La forme circulaire demeure la forme la plus intéressante pour l'enroulement de la coque 17 et son encombrement en configuration enroulée.

Les premiers plots 15 sont situés sur leur pourtour 16, c'est-à-dire sur le périmètre des ferrures, orientés vers l'extérieur de la ferrure pour faire face aux deuxièmes plots 18 de la coque 17. Les premiers plots 15 et les deuxièmes plots 18 sont de formes complémentaires afin de coopérer entre eux. Le terme plot est à prendre au sens large, et les deuxièmes plots 18 peuvent être aussi des perforations dans lesquelles les premiers plots 15 viennent s'insérer lorsque la coque 17 est enroulée. Pour citer un autre exemple, les deuxièmes plots 18 de la coque 17 peuvent être des pions, avantageusement coniques, et les premiers plots 15 des ferrures 14 peuvent être des gorges. En configuration enroulée de la coque 17, les pions de la coque 17 sont insérés dans les gorges des ferrures. Ainsi, la coque 17 est maintenue en position enroulée autour du mandrin 12. Lors du déploiement de la coque, les pions de la coque coulissent le long des gorges des ferrures et s'en séparent, et en configuration déployée de la coque, les pions sont complètement séparés des gorges. L'ensemble de premiers plots 15 et de deuxièmes plots 18 peut également être une liaison adhérente comprenant d'une part des protubérances et d'autre part des boucles de fil. Autrement dit, dans cette dernière alternative de plots formant une liaison adhérente, les premiers plots 15 et les deuxièmes plots 18 sont des éléments adhérents.

La figure 2, sur la partie gauche, représente schématiquement une vue en coupe d'un dispositif déployable 10 selon l'invention. La coque 17 enveloppe complètement la membrane 13 sur l'extérieur. La coque 17 peut également envelopper partiellement la membrane 13, c'est-à-dire sur une portion de la surface extérieure de la membrane 13 en configuration enroulée. Avantageusement, la coque 17 enveloppe la membrane 13 sur toute sa surface extérieure (comme représenté sur la figure). La coque 17 peut aussi envelopper la membrane 13 sur plusieurs tours, en se superposant à elle. Cette dernière configuration permet une meilleure reprise des charges de lancement.

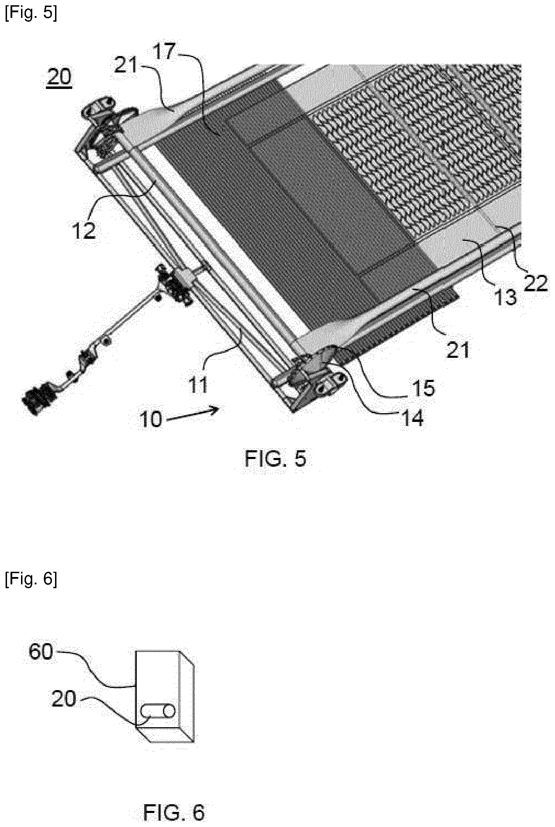

Comme visible sur la figure 5, la coque 17 en configuration déployée couvre une partie de la membrane 13. Cette partie recouverte par la coque 17 ne peut pas toujours être utilisée en tant que surface utile pour le positionnement de cellules solaires. Il y a un donc un compromis à faire entre la longueur de la coque 17 (c'est-à-dire le nombre de tours réalisés) et la surface utile non utilisable directement.

La coque 17 est composée d'une peau en matériaux composites. Parmi les matériaux composites pouvant former la coque, on peut citer la fibre de verre, la fibre de carbone (qui est appréciée pour sa rigidité et sa légèreté), ou un polymère de la famille des polymères polyaryléthercétones (PAEK), préférentiellement un polymère du type polyétheréthercétone (PEEK). Les polyaryléthercétones sont une famille de polymères thermoplastiques techniques à propriétés thermomécaniques élevées. Le polyétheréthercétone est très thermostable. On peut également citer le polyimide, polymère à base d'imide, thermostable dans une large plage de température (par exemple -200 à + 200°C) compatible avec l'utilisation dans le domaine spatial. Il peut s'agir par exemple du Kapton (film de polyimide) renforcé ou non.

La coque 17 est avantageusement formée sous forme de grille ou de filet. Il peut s'agir d'une structure tricotée.

L'ensemble formé par la coque 17 et les ferrures 14 auxquelles la coque 17 se trouve fixée en configuration enroulée permet une reprise des charges en traction-compression lors du lancement.

Comme représenté schématiquement sur la partie droite de la figure 2, la membrane 13 peut également supporter une multitude de lattes de formes diverses telles que un secteur de cylindre 31, une section en forme de « H » 32, un nid d'abeille 33, un tube 34,...

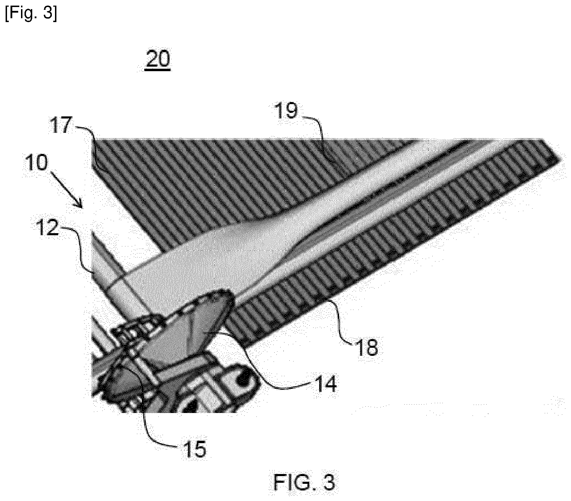

La figure 3 représente schématiquement une partie d'un ensemble déployable 20 en configuration déployée selon l'invention.

Comme on peut le voir, la coque 17 peut comprendre au moins un renfort 19 sensiblement parallèle au premier axe Z, qui permet de renforcer le maillage ou la grille formant la coque 17.

L'ensemble déployable 20 comprend un dispositif déployable 10 et deux mètre-rubans 21 positionnés de part et d'autre de la membrane 13 et reliés à la membrane, chacun étant apte à passer d'une configuration enroulée autour du premier axe Z en configuration enroulée du dispositif déployable 10 à une configuration déployée selon le deuxième axe X en configuration déployée du dispositif déployable 10.

Dans un mode de réalisation avantageux, la coque 17 est reliée aux deux mètre-rubans 21. Le déploiement des mètre-rubans 21 permet le déploiement simultané de la coque 17.

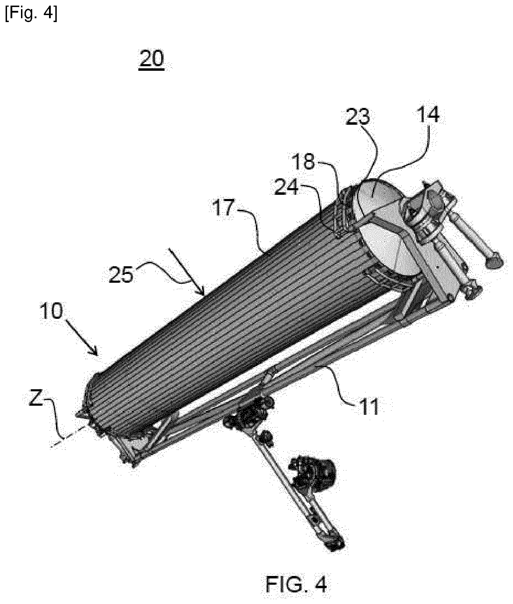

La figure 4 représente schématiquement un ensemble déployable 20 en configuration enroulée selon l'invention. Au niveau des ferrures 14, on voit dans cette configuration enroulée du dispositif déployable 10 les premiers plots 15 de forme complémentaire aux deuxièmes plots 18 de la coque 17 qui coopèrent pour maintenir la coque 17 en position enroulée autour des ferrures 14 et donc autour de la membrane 13, pour l'envelopper. Les premiers plots 15 des ferrures sont des protubérances et les deuxièmes plots 18 de la coque 17 sont des orifices configurés pour recevoir les protubérances et les maintenir en position dans les orifices. L'inverse peut être aussi envisagé : les premiers plots 15 peuvent être des orifices et les deuxièmes plots 18 peuvent être des protubérances. Dans ce cas, si la coque 17 fait plusieurs tours sur elle-même en configuration enroulée, la taille des protubérances (deuxièmes plots 18) doit être adaptée pour se superposer dans les orifices (premiers plots 15) des ferrures 14. La coque 17 forme ainsi un mandrin extérieur pour la membrane 13.

Le dispositif déployable 10 peut en outre comprendre un système de guidage de la coque 17. Le système de guidage est composé d'un ressort 23 et d'un appui surfacique 24. L'appui surfacique 24 est monté sur ressort 23 et le ressort est relié au bâti 11. L'appui surfacique 24 entoure au moins partiellement la coque 17 en configuration enroulée. Avantageusement, le dispositif déployable 10 comprend deux systèmes de guidages, un à chaque extrémité de la coque 17. Le système de guidage permet de garantir une bonne compacité de la coque 17 en position enroulée.

Le dispositif déployable 10 peut aussi comprendre un galet 25 configuré pour être en appui sur la coque 17 en configuration enroulée. Avantageusement, le galet 25 est central. Un tel galet 25 peut être obtenu par un moyen connu de l'homme du métier, par exemple un doigt en appui sur la coque 17, le doigt étant relié à un bras lui-même relié au bâti 11. Pour des générateurs solaires de 5 à 6 mètres de large, la coque 17 peut mesurer par exemple 10 mètres de long. Le galet 25 en appui sur la coque 17 permet de limiter le débattement, la flexion de l'ensemble. Le galet 25 forme un appui ponctuel.

La figure 5 représente schématiquement un ensemble déployable 20 en configuration déployée selon l'invention. L'ensemble déployable 20 peut comprendre en outre au moins un renfort 22 s'étendant entre les deux mètre-rubans 21 apte à relier la membrane 13 aux mètre-rubans 21.

Les mètre-rubans 21 servent de support à la membrane 13 et lui permettent de passer de sa configuration enroulée à sa configuration déployée.

La membrane 13 peut être disposée entre les deux mètre-rubans 21, comme on le voit sur la figure 5, et reliée aux mètre-rubans 21 par l'intermédiaire des renforts 22, mais elle peut aussi s'étendre au-delà des mètre-rubans 21, avec ou sans renforts 22.

La coque 17 peut aussi comprendre au moins un circuit imprimé flexible et/ou des composants électroniques. La présence d'un circuit imprimé et/ou de composants électroniques permet d'assurer une liaison électrique entre la membrane 13 destinée à fournir l'énergie électrique à partir de ses cellules solaires et le satellite.

L'invention offre de nombreux avantages. De par sa conception, l'ensemble déployable est réversible et réutilisable autant de fois que souhaité. La coque 17 assure la rigidité en configuration enroulée de l'ensemble, tout en le maintenant compact et optimisé en masse. La coque 17 permet de reprendre les charges de lancement sans ajout additionnel d'un autre gerbage, ce qui permet de conserver la quasi-totalité de la surface utile.

La figure 6 représente schématiquement un satellite 60 comprenant un ensemble déployable 20 selon l'invention. Un seul ensemble déployable 20 est représenté sur la figure 6. Un satellite 60 peut en comprendre plusieurs, sur différentes faces du satellite ou sur la même face selon la place disponible. Sur la figure 6, l'ensemble déployable 20 est représenté en configuration enroulée, avec la membrane 13 et la coque 17 enroulées autour du mandrin 12.

## Revendications

1. Dispositif déployable (10) comprenant :
- un bâti (11),
- un mandrin (12) mobile en rotation par rapport au bâti (11) autour d'un premier axe Z,
- une membrane (13) apte à passer d'une configuration enroulée autour du mandrin autour du premier axe Z à une configuration déployée selon un deuxième axe X sensiblement perpendiculaire au premier axe Z,
- deux ferrures circulaires (14) solidaires du mandrin (12) en leur centre, disposées de part et d'autre de la membrane (13) et comprenant des premiers plots (15) sur le périmètre (16) des ferrures,
- une coque (17) s'étendant entre les deux ferrures (14), la coque (17) comprenant des deuxièmes plots (18) de forme complémentaire à la forme des premiers plots (15), la coque (17) étant apte à passer:
d'une configuration enroulée dans laquelle la coque (17) est enroulée autour du périmètre des ferrures (14) enveloppant au moins partiellement la membrane (13) en configuration enroulée et dans laquelle les deuxièmes plots (18) coopèrent avec les premiers plots (15) sur le périmètre des ferrures (14), les premiers plots (15) et les deuxièmes plots (18) étant également distribués sur le périmètre de chaque ferrures des deux ferrures (14),
à une configuration déployée dans laquelle la coque (17) est superposée au moins partiellement à la membrane (13) en configuration déployée.

2. Dispositif déployable (10) selon la revendication 1, où la coque (17) est composée d'une peau en matériaux composites.

3. Dispositif déployable (10) selon l'une quelconque des revendications 1 ou 2, où la coque (17) comprend au moins un renfort (19) sensiblement parallèle au premier axe Z.

4. Dispositif déployable (10) selon l'une quelconque des revendications 1 à 3, où la coque (17) comprend au moins un circuit imprimé flexible et/ou des composants électroniques.

5. Ensemble déployable (20) comprenant :
- un dispositif déployable (10) selon l'une quelconque des revendications 1 à 4,
- deux mètre-rubans (21) positionnés de part et d'autre de la membrane (13) et reliés à la membrane, chacun étant apte à passer d'une configuration enroulée autour du premier axe Z en configuration enroulée du dispositif déployable (10) à une configuration déployée selon le deuxième axe X en configuration déployée du dispositif déployable (10).

6. Ensemble déployable (20) selon la revendication 5, où la membrane (13) s'étend entre les deux mètre-rubans (21).

7. Ensemble déployable (20) selon la revendication 5 ou 6, qui comprend en outre au moins un renfort (22) s'étendant entre les deux mètre-rubans (21) apte à relier la membrane (13) aux mètre-rubans (21).

8. Ensemble déployable (20) selon l'une quelconque des revendications 5 à 7, où la coque (17) est reliée aux deux mètre-rubans (21).

9. Ensemble déployable (20) selon l'une quelconque des revendications 5 à 8, qui comprend un galet (25) configuré pour être en appui sur la coque (17) en configuration enroulée.

10. Satellite (60) comprenant au moins un ensemble déployable (20) selon l'une quelconque des revendications 5 à 9.

## Patentansprüche

1. Entfaltbare Vorrichtung (10), Folgendes umfassend:
- ein Gestell (11),
- einen Dorn (12), der relativ zum Gestell (11) um eine erste Achse Z drehbar ist,
- eine Membran (13), die von einer um den Dorn um die erste Achse Z aufgewickelten Konfiguration in eine entlang einer zweiten Achse X, die im Wesentlichen senkrecht zur ersten Achse Z verläuft, entfaltete Konfiguration übergehen kann,
- zwei kreisförmige Beschläge (14), die mit dem Dorn (12) in ihrer Mitte fest verbunden sind, auf beiden Seiten der Membran (13) angeordnet sind und erste Stifte (15) am Umfang (16) der Beschläge umfassen,
- eine Schale (17), die sich zwischen den beiden Beschlägen (14) erstreckt, wobei die Schale (17) zweite Stifte (18) umfasst, die komplementär zur Form der ersten Stifte (15) geformt sind, wobei die Schale (17) zu Folgendem geeignet ist:
von einer aufgewickelten Konfiguration, in der die Schale (17) um den Umfang der Beschläge (14) gewickelt ist, die die Membran (13) in aufgewickelter Konfiguration mindestens teilweise umschließen, und in der die zweiten Stifte (18) mit den ersten Stiften (15) am Umfang der Beschläge (14) zusammenwirken, wobei die ersten Stifte (15) und die zweiten Stifte (18) ebenfalls über den Umfang jedes Beschlags der beiden Beschläge (14) verteilt sind, zu einer entfalteten Konfiguration überzugehen, in der die Schale (17) mindestens teilweise über die Membran (13) in entfalteter Konfiguration gelegt ist.

2. Entfaltbare Vorrichtung (10) nach Anspruch 1, worin die Schale (17) aus einer Haut aus Verbundwerkstoffen besteht.

3. Entfaltbare Vorrichtung (10) nach einem der Ansprüche 1 oder 2, worin die Schale (17) mindestens eine Verstärkung (19) umfasst, die im Wesentlichen parallel zur ersten Achse Z verläuft.

4. Entfaltbare Vorrichtung (10) nach einem der Ansprüche 1 bis 3, worin die Schale (17) mindestens eine flexible gedruckte Schaltung und/oder elektronische Komponenten umfasst.

5. Entfaltbare Baugruppe (20), Folgendes umfassend:
- eine entfaltbare Vorrichtung (10) nach einem der Ansprüche 1 bis 4,
- zwei Maßbänder (21), die auf beiden Seiten der Membran (13) positioniert und mit der Membran verbunden sind, wobei jedes von einer um die erste Achse Z aufgewickelten Konfiguration, wenn die entfaltbare Vorrichtung (10) in einer aufgewickelten Konfiguration ist, in eine entlang der zweiten Achse X entfaltete Konfiguration, wenn die entfaltbare Vorrichtung (10) in einer entfalteten Konfiguration ist, übergehen kann.

6. Entfaltbare Baugruppe (20) nach Anspruch 5, worin sich die Membran (13) zwischen den beiden Maßbändern (21) erstreckt.

7. Entfaltbare Baugruppe (20) nach Anspruch 5 oder 6, die ferner mindestens eine Verstärkung (22) umfasst, die sich zwischen den beiden Maßbändern (21) erstreckt und geeignet ist, um die Membran (13) mit den Maßbändern (21) zu verbinden.

8. Entfaltbare Baugruppe (20) nach einem der Ansprüche 5 bis 7, worin die Schale (17) mit den beiden Maßbändern (21) verbunden ist.

9. Entfaltbare Baugruppe (20) nach einem der Ansprüche 5 bis 8, die eine Rolle (25) umfasst, die so konfiguriert ist, dass sie in aufgewickelter Konfiguration gegen die Schale (17) drückt.

10. Satellit (60), der mindestens eine entfaltbare Baugruppe (20) nach einem der Ansprüche 5 bis 9 umfasst.

## Claims

1. A deployable device (10) comprising:
- a supporting structure (11),
- a mandrel (12) able to move in rotation with respect to the supporting structure (11) about a first axis Z,
- a membrane (13) able to pass from a rolled-up configuration rolled up around the mandrel about the first axis Z to a deployed configuration deployed along a second axis X substantially perpendicular to the first axis Z,
- two circular fittings (14) secured to the mandrel (12) at their centre, arranged on either side of the membrane (13) and comprising first stubs (15) on the perimeter (16) of the fittings,
- a casing (17) extending between the two fittings (14), the casing (17) comprising second stubs (18) of a shape complementing the shape of the first stubs (15), the casing (17) being able to pass:
from a rolled-up configuration in which the casing (17) is rolled up around the perimeter of the fittings (14) at least partially enveloping the membrane (13) in the rolled-up configuration and in which the second stubs (18) cooperate with the first stubs (15) on the perimeter of the fittings (14), the first stubs (15) and the second stubs (18) being equally distributed on the perimeter of each of both fittings (14), to a deployed configuration in which the casing (17) is at least partially superposed on the membrane (13) in the deployed configuration.

2. The deployable device (10) according to claim 1, where the casing (17) is made up of a skin made of composite materials.

3. The deployable device (10) according to any one of claims 1 or 2, where the casing (17) comprises at least one reinforcement (19) substantially parallel to the first axis Z.

4. The deployable device (10) according to any one of claims 1 to 3, where the casing (17) comprises at least one flexible printed circuit and/or electronic components.

5. A deployable assembly (20) comprising:
- a deployable device (10) according to any one of claims 1 to 4,
- two tape springs (21) positioned on either side of the membrane (13) and connected to the membrane, each being able to pass from a rolled-up configuration rolled up around the first axis Z when the deployable device (10) is in the rolled-up configuration to a deployed configuration deployed along the second axis X when the deployable device (10) is in the deployed configuration.

6. The deployable assembly (20) according to claim 5, where the membrane (13) extends between the two tape springs (21).

7. The deployable assembly (20) according to claim 5 or 6, further comprising at least one reinforcement (22) extending between the two tape springs (21), that is able to connect the membrane (13) to the tape springs (21).

8. The deployable assembly (20) according to any one of claims 5 to 7, where the casing (17) is connected to the two tape springs (21).

9. The deployable assembly (20) according to any one of claims 5 to 8, comprising a roller (25) configured to press against the casing (17) in the rolled-up configuration.

10. A satellite (60) comprising at least one deployable assembly (20) according to any one of claims 5 to 9.
